# EUROPÄISCHE PATENTSCHRIFT

(11) **EP 2 432 753 B1**
(45) Veröffentlichungstag und Bekanntmachung des Hinweises auf die Patenterteilung: **10.07.2013**
(21) Anmeldenummer: 10721481.9
(22) Anmeldetag: 19.05.2010
(51) Int. Cl.: C04B 35/573

(54) **VERFAHREN ZUR HERSTELLUNG EINES SIC-KERAMIK-BAUTEILS**
METHOD FOR PRODUCING A SIC CERAMIC COMPONENT
PROCÉDÉ DE FABRICATION D'UNE PIÈCE EN CÉRAMIQUE SIC

(30) Priorität: 19.05.2009 DE 102009021976
(43) Veröffentlichungstag der Anmeldung: 28.03.2012
(73) Patentinhaber: SKZ-KFE gGmbH Kunststoff-Forschung und - Entwicklung, 97076 Würzburg (DE)
(72) Erfinder: ULMER, Bernhard, 97215 Uffenheim (DE); RADOVANOVIC, Itana, 97070 Würzburg (DE); SCHUBERT, Martina, 97080 Würzburg (DE); LEHMANN, Jürgen, 95517 Emtmannsberg (DE); SCHELER, Sven, 95447 Bayreuth (DE)
(74) Vertreter: Rau, Schneck & Hübner
(86) Internationale Anmeldenummer: PCT/EP2010/056900
(87) Internationale Veröffentlichungsnummer: WO 2010/133641

(56) Entgegenhaltungen:
- EP-A1- 1 459 861
- DE-A1- 10 329 822
- DE-A1- 19 947 731

## Beschreibung

Die Erfindung betrifft ein Verfahren zur Herstellung eines SiC-Keramik-Bauteils.

Es ist bekannt, dass bei biomorphen Werkstücken biologische Strukturen auf künstliche Werkstoffe übertragen werden. Dadurch kann zum Beispiel das weite Eigenschaftsprofil von weichen bis hin zu harten Hölzern als Grundlage für einen künstlichen Werkstoff dienen. Beispielsweise kann eine natürliche Holzstruktur keramisiert werden. Ein Ausgangskörper wird in einem Formgebungsverfahren, wie Drehen, Fräsen oder Bohren, hergestellt und anschießend unter Schutzgasatmosphäre pyrolysiert. Das so entstandene Kohlenstoff-Templat (Formkörper) wird anschließend mit flüssigem Silizium infiltriert. Bei der Infiltration reagiert der Kohlenstoff des Templats mit dem durch die Kapillarkräfte in das Templat eindringenden Silizium zu Siliziumcarbid (SiC). Die Verwendung von natürlichen Templaten hat den Nachteil, dass ein entsprechend dem Wachstum unregelmäßiges Gefüge sowie Unterschiede in der chemischen Zusammensetzung vorliegen.

Aus der DE 199 47 731 B4 ist ein Verfahren zur Herstellung eines Bauteils aus einer SiC-Keramik bekannt, bei dem ein Ausgangskörper aus einem cellulosehaltigen Material und einem pyrolysierbaren Bindemittel pyrolysiert wird. Im Anschluss wird der pyrolysierte Ausgangskörper in Form eines Templats mit Silizium infiltriert. Das Silizium reagiert mit dem Kohlenstoff zu SiC. Anschließend wird das Bauteil, beispielsweise durch Trennen oder Polieren, nachbearbeitet. Nachteilig bei diesem Verfahren ist, dass technische Halbzeuge in Form von plattenförmigen Holzwerkstoffen, wie OSB- (Oriented Strand Board), Multiplex- (schichtverleimte), HDF-(hochdichte Faser-) Platten, verwendet werden müssen, was die Formgebung erheblich einschränkt.

Aus der DE 103 29 822 A1 ist ein Verfahren zur Herstellung von Keramiken aus SiC bekannt, bei dem ein cellulosehaltiger Werkstoff in Form eines porösen Vorkörpers hergestellt wird. Dieser wird mittels Pyrolyse in einen offenporigen Kohlenstoffkörper umgewandelt, und durch Infiltration mit Silizium entsteht eine Silizium aufweisende Keramik. Dabei wird ein cellulosehaltiges Pulver zur Herstellung des porösen Vorkörpers verwendet, wobei dieses in die gewünschte Form gepresst wird. Dabei hat es sich als nachteilig erwiesen, dass prinzipiell der Vorkörper lediglich durch Verpressen des cellulosehaltigen Pulvers herstellbar ist, wodurch die realisierbaren Geometrien stark eingeschränkt sind.

Aus der DE 29 10 628 A1 ist weiterhin ein Verfahren zur Herstellung von reaktionsgebundenen Siliziumkarbidkeramiken, insbesondere Dichtringen bekannt, bei dem ein mit Kohle und Bindemittel beschichtetes, lockeres, körniges Siliziumkarbidmaterial aus wässriger Lösung herstellt und anschließend zu einem Pressling verpresst wird. Außerdem wird ein mit Kohle und Bindemittel beschichtetes Siliziumpulver aus wässriger Lösung hergestellt, das anschließend ebenfalls zu einem Silizium-Kohle-Pressling verpresst wird. Die Presslinge werden in Kontakt gebracht und durch Erhitzen auf Temperaturen oberhalb des Schmelzpunktes von Silizium wird der Siliziumkarbid-Kohle-Pressling mit flüssigem Silizium infiltriert. Dadurch entsteht eine Silizium aufweisende Keramik. Dabei hat es sich als nachteilig erwiesen, dass das Herstellen der Vorkörper durch Verpressen und die Verwendung von zwei Presslingen die Formgebung stark einschränkt. Ebenfalls nachteilig ist, dass für die Entfernung der Überreste des Silizium-Kohle-Vorkörpers Nachbearbeitungen der Keramik nötig sind.

Aus der EP 1 459 861 A1 ist ein Verfahren zur Herstellung eines Hohlkörpers bekannt. Die Formmasse des Ausgangskörpers kann unter anderem Füllstoffe, wie Holzfasern und thermoplastische Bindemittel, wie beispielsweise Polyolefine, enthalten. Ihr Ausgangskörper kann carbonisiert werden. Der pyrolisierte Ausgangskörper kann mit Silizium infiltriert werden. Der Ausgangskörper wird durch Verpressen hergestellt.

Aus der WO 94/10101 A1 ist ein Verfahren zur Herstellung reaktionsgebundener, siliziuminfiltrierter Siliziumkarbid Formkörper bekannt, bei dem aus einem Kohle oder Graphit enthaltenden Pressgranulat ein Formkörper gepresst wird, der anschließend mit Silizium infiltriert wird. Dabei hat sich als nachteilig erwiesen, dass durch das Herstellen der Formkörper durch Verpressen die realisierbaren Geometrien der Formkörper erheblich eingeschränkt werden.

Der Erfindung liegt die Aufgabe zugrunde, ein Verfahren zur Herstellung eines SiC-Keramik-Bauteils anzugeben, das in einfacher Weise durchfiihrbar ist und das zu einem nicht porösen und formgenauen Bauteil führt.

Diese Aufgabe wird erfindungsgemäß durch ein Verfahren zur Herstellung eines SiC-Keramik-Bauteils mit folgenden Schritten gelöst:
a) Herstellen eines thermoplastischen Ausgangsstoffs durch Mischen von - jeweils bezogen auf den Ausgangsstoff -
   60 bis 95 Gew.% Holzfasern und
   5 bis 40 Gew.% Polypropylen (PP), Polyethylen (PE) oder Polybuten (PB) oder Mischungen hieraus als thermoplastischem Bindemittel, wobei für die Schmelze-Massefließrate (MFR) von PP, PE und PB gilt: Für PP: MFR = 0,5 bis 30 g/10 min., gemessen bei 2,16 kg und 230° C Für PE: MFR = 0,5 bis 30 g/10 min., gemessen bei 5 kg und 190° C Für PB: MFR = 1 bis 60 g/10 min., gemessen bei 2,16 kg und 190 ° C,
b) Herstellen eines Formkörpers aus dem thermoplastischen Ausgangsstoff durch Extrusion oder Spritzgießen;
c) Pyrolyse des Formkörpers unter Sauerstoffausschluss zu einem Kohlenstoff-Templat; und
d) Infiltration des Templats mit einer Siliziumschmelze.

Die Schmelze-Massefließrate (Melt Flow Rate MFR), früher auch Schmelze-Fließindex (Melt Flow Index MFI) genannt, wird in einem Verfahren ermittelt, das durch DIN EN ISO 1133 genormt ist. Hierbei wird in einem beheizten Rohr Kunststoff-Granulat auf die in der genannten Norm für den jeweiligen Werkstoff genannte Temperatur vorgewärmt. Das Rohr wird von oben mit einem Stempel verschlossen. Am unteren Ende des Rohres befindet sich eine Platte mit einer kleinen Bohrung als Düse in der Mitte. Nach der vorgeschriebenen Vorwärmzeit wird ein Gewicht, zum Beispiel 2,16 kg oder 5 kg, auf den Stempel gesetzt und dadurch der aufgeschmolzene Kunststoff durch diese Bohrung gedrückt. Bei höherem Gewicht und/oder höherer Temperatur wird demzufolge auch mehr Material pro Zeiteinheit durch die Düse gedrückt. Die MFR bezeichnet dann die Menge an Kunststoff-Material in Gramm, die innerhalb von 10 min. durch diese Düse gedrückt wird.

Als besonders vorteilhaft hat sich herausgestellt, mit einem thermoplastischen Polymer als Bindemittel zu arbeiten, da sich hiermit auch bei hohen Anteilen an Holzfasern die großen Vorteile einer thermoplastischen Formgebung ausnutzen lassen. Dies ermöglicht die konturengenaue Herstellung profilartiger oder anderer 3 D-Strukturen mit komplexen Geometrien, wie beispielsweise Hinterschneidungen, Krümmungen, Wölbungen oder Hohlräume, wobei auf eine kostenintensive Nachbearbeitung verzichtet werden kann. Wie sich weiterhin herausgestellt hat, erfolgt bei der Pyrolyse ein Schrumpfvorgang, der auch und insbesondere bei 3 D-Strukturen die Form als solche nicht verändert, das heißt es erfolgt überraschenderweise ein dreidimensional gleichmäßiger Schrumpfvorgang von 25 bis 30 Vol.-%. Bei der Herstellung des Formkörpers durch Extrusion kann mit einem höheren Anteil an Holzfasern und mit einem Bindemittel höherer Viskosität, also niedrigerer Schmelze-Massefließrate gearbeitet werden, wodurch eine besonders hohe Formstabilität erreicht wird. Bei der Herstellung des Formkörpers durch Spritzgießen muss der Anteil an Holzfasern reduziert werden; außerdem muss Bindemittel mit geringerer Viskosität, also höherer Schmelze-Massefließrate, eingesetzt werden. Bei der Extrusion werden primär Halbzeuge hergestellt, während durch Spritzgießen insbesondere Formkörper mit komplizierter dreidimensionaler Form hergestellt werden können. Sowohl beim Spritzgießen als auch bei der Extrusion kann jeweils die Direkt-Extrusion oder das Direkt-Spritzgießen eingesetzt werden, das heißt die Herstellung des Ausgangsstoffs erfolgt bereits im Extruder oder in der Spritzgieß-Maschine. Andererseits kann naturgemäß der Ausgangsstoff in gesonderten Mischern hergestellt werden und beispielsweise dann als Granulat im Extruder oder in der Spritzgieß-Maschine weiterverarbeitet werden.

Es ist vorteilhaft, wenn bei Herstellen eines Formkörpers durch Extrusion Holzfasern mit einem Gewichtsanteil von 80 bis 90 Gew.% und Bindemittel mit einer Schmelze-Massefließrate MFR = 1 bis 20 g/10 min eingesetzt werden, insbesondere wenn Holzfasern mit einem Anteil von 90 Gew.% und Bindemittel mit einer Schmelze-Massefließrate MFR = 2 g/10 min. eingesetzt werden.

Weiterhin ist es von Vorteil, wenn bei Herstellen eines Formkörpers durch Spritzgießen Holzfasern in einem Anteil von 60 bis 70 Gew.% und Bindemittel mit einer Schmelze-Massefließrate MFR = 7 bis 36 g/10 min eingesetzt werden, und zwar insbesondere wenn Holzfasern mit einem Anteil von 70 Gew.% und Bindemittel mit einer Schmelze-Massefließrate MFR = von 7 g/10 min eingesetzt werden.

Weiterhin ist es von Vorteil, wenn - jeweils bezogen auf den Ausgangsstoff - 0,5 bis 5 Gew.% Haftvermittler eingesetzt werden., wobei bevorzugt als Haftvermittler mit Maleinsäureanhydrid gepfropftes Polypropylen (PP-MAH) oder mit Maleinsäureanhydrid gepfropftes Polyethylen (PE-MAH) oder mit Maleinsäureanhydrid gepfropftes Polybuten (PB-MAH) oder Vinyltrimethoxysilan oder Vinyltriethoxysilan eingesetzt werden.

Weiterhin ist es von Vorteil, wenn - jeweils bezogen auf den Ausgangsstoff - 0,5 bis 3 Gew.% Gleitmittel eingesetzt werden, insbesondere wenn als Gleitmittel Polyolefinwachse oder Ca-Stearat oder Zn-Stearat oder Erucasäureamid oder Montansäurewachse eingesetzt werden.

Darüber hinaus kann es von Vorteil sein, wenn - jeweils bezogen auf den Ausgangsstoff - 0,05 bis 0,5 Gew.% Stabilisatoren eingesetzt werden, insbesondere wenn als Stabilisatoren sterisch gehinderte Phenole oder Amine oder Phosphite oder Benzophenone eingesetzt werden.

Schließlich können noch vorteilhafterweise als Füllstoffe Silizium und/oder Siliziumcarbid und/oder siliziertes Siliziumcarbid und/oder Kohlenstoff eingesetzt werden, wobei hiermit der Ausgangsstoff zu 100 Gew.% aufgefiillt wird.

Die Erfindung liefert damit einen entscheidenden Beitrag zur Herstellung von SiC-Keramik-Bauteilen, wobei die Vorteile von thermoplastischen Formgebungsverfahren mit den Vorteilen von pyrolysierten SiC-Keramik-Bauteilen vereint werden, indem ein reversibel verformbarer thermoplastischer Stoff als Grundlage für ein Verfahren zur Herstellung eines SiC-Keramik-Bauteils verwendet wird. Das vorgestellte Verfahren ist damit deutlich preisgünstiger und führt in wesentlich kürzerer Zeit zum SiC-Keramik-Bauteil, als die bisher angewendeten Verfahren.

Nachfolgend wird die Erfindung anhand der Zeichnung näher erläutert. In der Zeichnung zeigt
- Fig. 1: eine als Direkt-Extrudier-Anlage ausgebildete Extrudier-Anlage zur Herstellung eines Formkörpers,
- Fig. 2: eine Spritzgieß-Anlage zur Herstellung eines Formkörper,

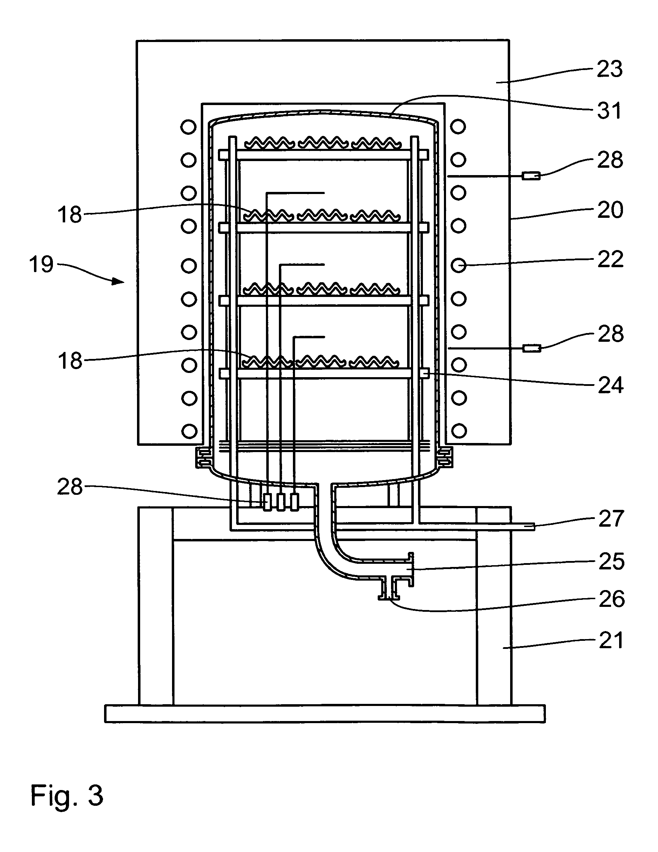

- Fig. 3: einen Pyrolyse-Ofen,
- Fig. 4: einen Silizier-Ofen,
- Fig. 5: ein Ablauf-Diagramm bezüglich der Herstellung eines SiC-Keramik-Bauteils,
- Fig. 6: ein SiC-Keramik-Bauteil mit Ausnehmungen, das im ExtrusionsVerfahren hergestellt ist und
- Fig. 7: ein im Spritzgieß-Verfahren hergestelltes SiC-Keramik-Bauteil.

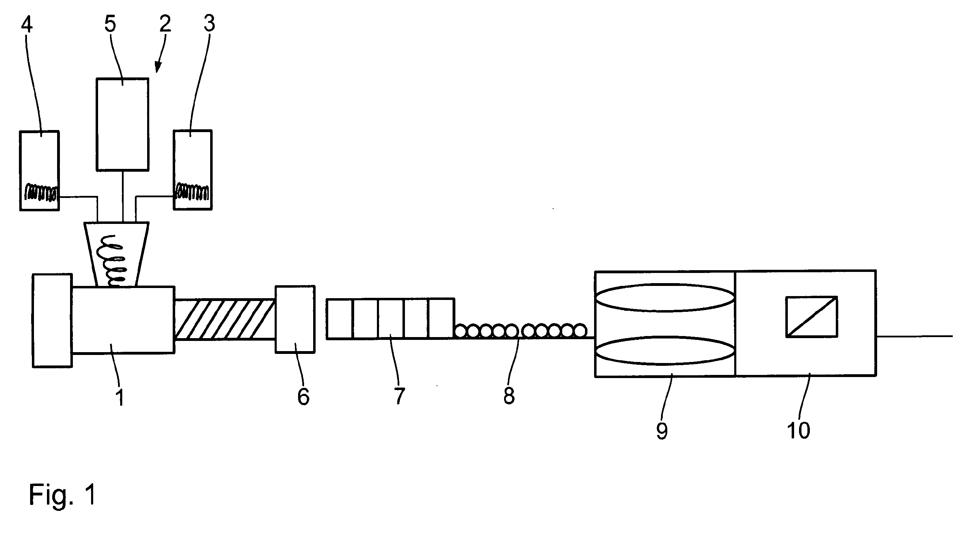

Wie sich aus Fig. 1 ergibt, weist eine als Direkt-Extrudier-Anlage ausgebildete Extrudier-Anlage einen Extruder 1 auf, dem eine Dosier-Anlage 2 vorgeordnet ist. Diese weist mindestens eine Dosier-Vorrichtung 3 zur Zuführung von Holzfasern und eine Dosier-Vorrichtung 4 zur Zuführung von Bindemittel auf. Eine oder mehrere nur angedeutete Dosier-Vorrichtungen 5 dienen zur Zuführung von Haftvermittlern, Gleitmitteln und anderen geeigneten Additiven. Im Extruder 1 werden die Holzfasern, das Bindemittel und ggf. weitere zugeführte Zuschlagstoffe intensiv gemisch und aufgeschmolzen. Im Extruder 1 wird also der Ausgangsstoff der oben beschriebenen Zusammensetzung durch Aufschmelzen und Mischen erzeugt.

Dem Extruder 1 ist ein Form-Werkzeug 6, in der Regel also eine Düse, nachgeordnet, durch das ein endloser Strang des aufbereiteten Ausgangsstoffes als Halbzeug extrudiert wird. Dieser Halbzeug-Strang wird in einer Wasser-Kühl-Vorrichtung 7 und/oder einer Luft-Kühl-Vorrichtung 8 abgekühlt, so dass eine ausreichende Formstabilität erreicht wird. Den KühlVorrichtungen 7, 8 ist eine Band-Abzugs-Vorrichtung 9 und anschließend eine Säge 10 nachgeordnet, in der aus dem endlosen Strang Formkörper geschnitten werden.

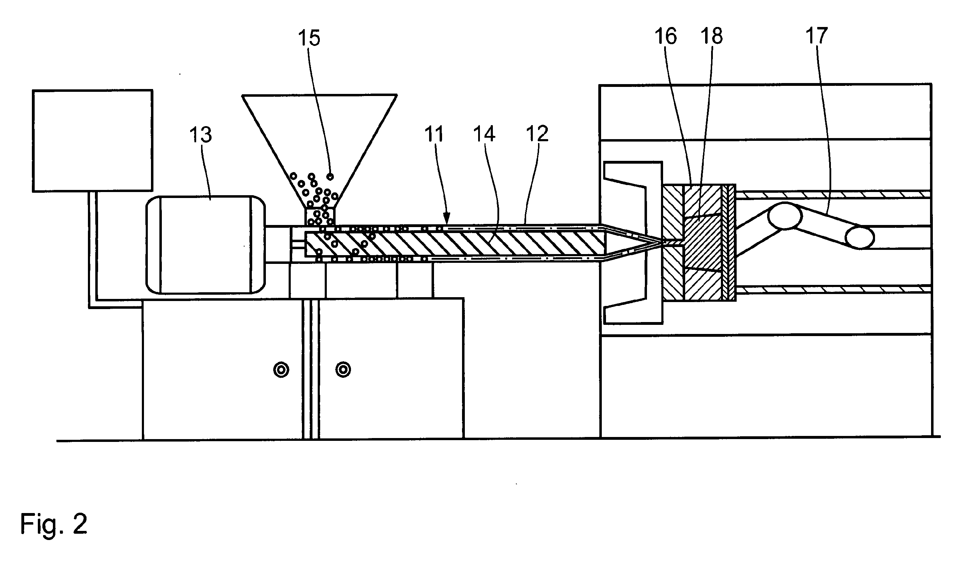

In Fig. 2 ist eine ebenfalls für das erfindungsgemäße Verfahren einsetzbare Spritzgieß-Anlage dargestellt, die eine Spritzgieß-Maschine 11 aufweist, in deren Gehäuse 12 eine von einem Motor 13 antreibbare Schnecke 14 angeordnet ist, der im vorliegenden Fall der bereits vorgemischte und granulierte Ausgangsstoff als Granulat 15 zugeführt wird. Der aufgeschmolzene Ausgangsstoff wird in eine Spritzgießform 16 gepresst, die mit einer Schließ-Vorrichtung 17 während des Einspritzens geschlossen gehalten und anschließend geöffnet wird. Durch diesen Spritzgießvorgang können dreidimensionale Formkörper 18 in beinahe jeder beliebigen dreidimensionalen Struktur erzeugt werden.

Die nur angedeuteten Formkörper 18 werden in einem als nach oben zu öffnenden Hauben-Ofen ausgebildeten Pyrolyse-Ofen 19 pyrolysiert. Dieser weist ein im Betrieb geschlossenes Gehäuse 20 auf, das auf einem Gestell 21 abgestützt ist. Das Gehäuse 20 ist mit Heizleitern 22 und einer Wärme-Isolierung 23 umgeben. Im Gehäuse 20 sind Chargenträger 24 aus Graphit angeordnet, auf denen die zu pyrolysierenden Formkörper 18 abgelegt werden. Aus dem Gehäuse 20 mündet ein Abgasrohr 25 aus, an dem ein Vakuum-Anschluss 26 vorgesehen ist. In das Gehäuse 20 münden Schutzgas-Leitungen 27 ein. Außerdem sind verschiedene Thermoelemente 28 zur Überwachung und Steuerung vorgesehen.

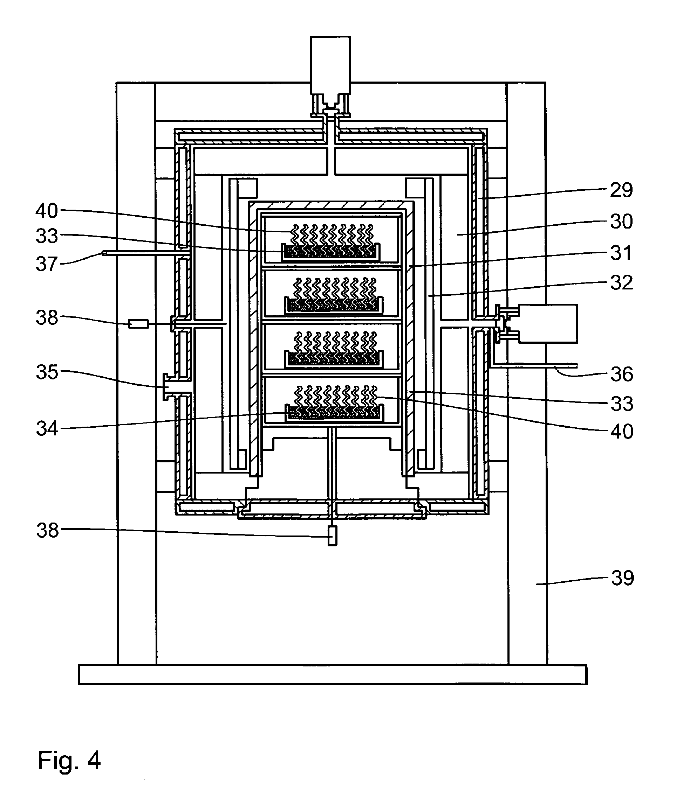

Der in Fig. 4 dargestellte Silizier-Ofen weist einen wassergekühlten Ofen-Kessel 29 auf, der auf seiner Innenseite mit einer Wärme-Isolierung 30 aus Graphit versehen ist. Im Innenraum des Kessels 29 ist eine Retorte 31 aus Graphit angeordnet, die von Heizleitern 32 umgeben ist. In der Retorte sind Chargen-Tiegel 33 aus Graphit übereinander angeordnet, in die jeweils Silizium-Pulver 34 eingefüllt wird. In dieses Silizium-Pulver 34 in den Tiegeln 33 werden die pyrolysierten Formkörper 18 gesteckt. Der Silizier-Ofen weist einen Vakuum-Anschluss 35, eine Schutzgas-Leitung 36 und einen Abgas-Anschluss 37 auf. Außerdem sind auch hier verschiedene Thermo-Elemente 38 zur Überwachung und Steuerung des Prozesses vorgesehen. Der Ofen-Kessel 29 ist auf einem Gestell 39 abgestützt.

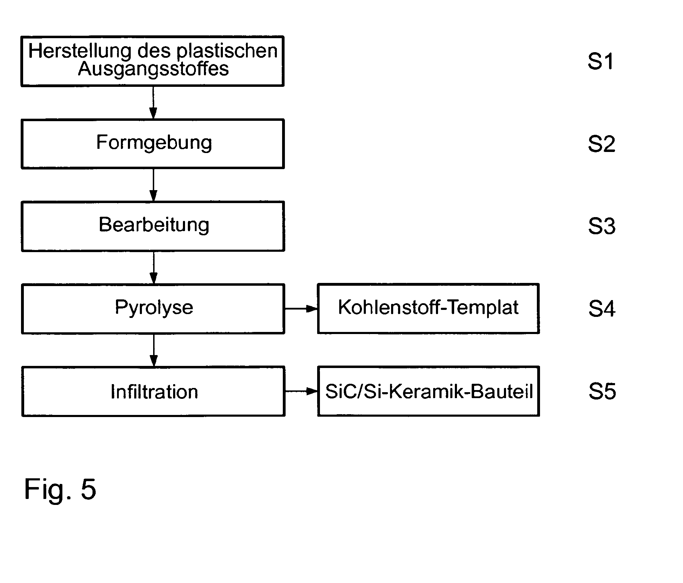

Wie sich aus dem Ablauf-Diagramm entsprechend Fig. 5 ergibt, wird in einem ersten Arbeitsschritt S1 ein thermoplastischer Ausgangsstoff hergestellt, und zwar aus Holzfasern und einem thermoplastischen Bindemittel und gegebenenfalls Zugschlagstoffen, wie es im Einzelnen oben bereits geschildert worden ist. Die Herstellung dieses Ausgangsstoffs erfolgt beispielsweise im Extruder 1 oder in der Spritzgieß-Maschine 11 oder vorab in einem gesonderten Prozess.

In einem anschließenden Verfahrensschritt S2 wird der thermoplastische Ausgangsstoff in seine Form gebracht. Dies geschieht in dem Form-Werkzeug 6 des Extruders 1 oder der Spritzgieß-Form 16 der Spritzgieß-Maschine 11, wobei auf der Spritzgieß-Maschine 11 der Formkörper 18 hergestellt wird. Auf der Extrudier-Anlage wird dagegen Halbzeug extrudiert, das mittels der Säge 10 zu Formkörpern geschnitten wird. Durch die Art der Herstellung der Formköper 18 haben diese einen hohen Anteil an pyrolisierbaren Bestandteilen.

In einem weiteren nur fakultativ stattfindenden Arbeitsschritt S3 erfolgt gegebenenfalls eine Oberflächenbehandlung oder -bearbeitung der Formkörper.

Im Verfahrensschritt S4 werden die Formkörper 18 pyrolysiert, wobei die Pyrolyse unter Vakuum oder in einer Schutzgasatmosphäre bei Temperaturen von 800° bis 1800° C stattfindet. Hierbei werden alle flüchtigen Bestandteile ausgetrieben. Am Ende des Pyrolyse-Verfahrensschrittes S4 wird das bereits erwähnte Kohlenstoff-Templat 40 erhalten, und zwar in hoher Formstabilität.

Diese Kohlenstoff-Template 40 werden in den Silizier-Ofen eingebracht, und zwar in das Silizium-Pulver 34 in den Chargen-Tiegeln 33. Im Verfahrensschritt S5 wird der Silizier-Ofen aufgeheizt, so dass das Silizium-Pulver 34 schmilzt. In der Regel wird der Ofen evakuiert, so dass bei einer Temperatur von etwa 1600° C das flüssige Silizium in die Kohlenstoff-Template 40 infiltriert wird und mit diesem ein Bauteil aus Siliziumkarbid (SiC) bildet. Es wird also ein SiC-Keramik-Bauteil gebildet, das geringe Porosität aufweist und trotz eines Schrumpfprozesses während der Pyrolyse insgesamt konturtreu und endkonturnah ist, also der ursprünglichen Form sowie der Zielform des SiC-Keramik-Bauteils geometrisch sehr ähnlich ist.

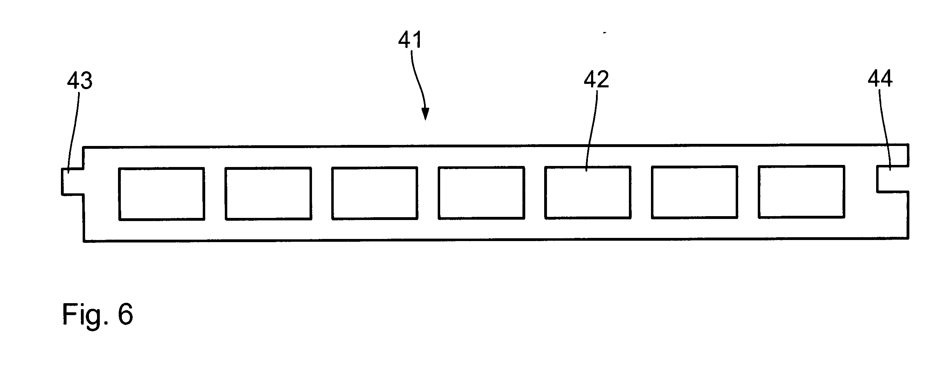

Fig. 6 zeigt ein SiC-Keramik-Bauteil 41, dessen ursprünglicher Formkörper auf der Extruder-Anlage gemäß Fig. 1 durch Absägen aus einem Endlosstrang hergestellt worden ist. Es ist im Wesentlichen flach-rechteckig ausgebildet und weist eine größere Zahl von Ausnehmungen 42 auf. An einer Schmalseite ist ein Steg 43 nach Art einer Passfeder ausgebildet, während an der gegenüberliegenden Schmalseite eine dem Steg 43 angepasste Nut 44 ausgebildet ist. So können benachbarte Bauteile 41 ineinander gesteckt werden. Die Darstellung zeigt, mit welch hoher Formgenauigkeit derartige Bauteile 41 herstellbar sind.

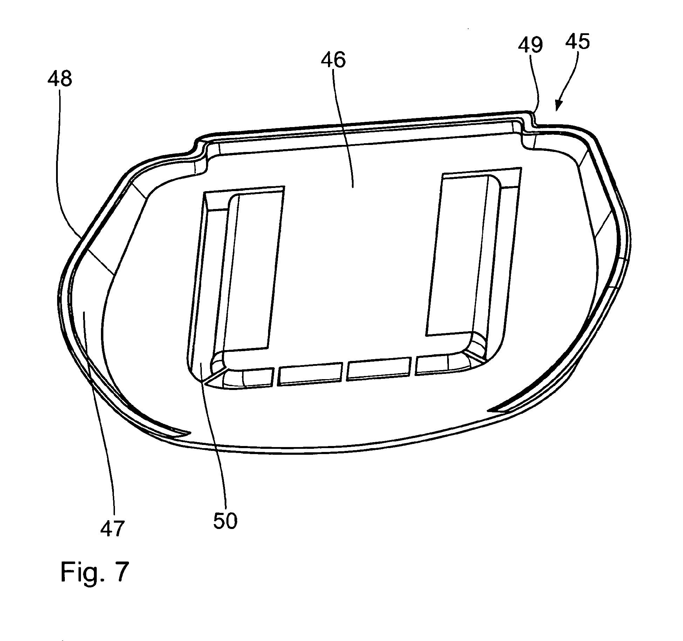

Fig. 7 zeigt ein SiC-Keramik-Bauteil 45, dessen ursprünglicher Formkörper 18 auf der Spritzgieß-Anlage gemäß Fig. 2 hergestellt worden ist. Es weist einen Boden 46 mit einem diesen im Wesentlichen umschließenden Seitenrand 47 auf. Der Seitenrand 47 weist gebogene Randabschnitte 48 sowie abgerundete Ecken 49 auf. Im Boden 46 sind weiterhin Ausnehmungen 50 ausgebildet. Auch hieran wird verdeutlicht, dass komplizierte Formgebungen möglich sind und dass das SiC-Keramik-Bauteil eine sehr genaue dreidimensionale Formähnlichkeit mit dem ursprünglichen Formkörper 18 hat, obwohl dieser bei der Pyrolyse geschrumpft ist.

## Patentansprüche

1. Verfahren zur Herstellung eines SiC-Keramik-Bauteils mit folgenden Schritten:
a) Herstellen eines thermoplastischen Ausgangsstoffs durch Mischen von - jeweils bezogen auf den Ausgangsstoff - 60 bis 95 Gew.% Holzfasern und
5 bis 40 Gew.% Polypropylen (PP), Polyethylen (PE) oder Polybuten (PB) oder Mischungen hieraus als thermoplastischem Bindemittel,
wobei für die Schmelze-Massefließrate (MFR) von PP, PE und PB gilt:
Für PP: MFR = 0,5 bis 30 g/10 min., gemessen bei 2,16 kg und 230° C
Für PE: MFR = 0,5 bis 30 g/10 min., gemessen bei 5 kg und 190° C
Für PB: MFR = 1 bis 60 g/10 min., gemessen bei 2,16 kg und 190 ° C,
b) Herstellen eines Formkörpers aus dem thermoplastischen Ausgangsstoff durch Extrusion oder Spritzgießen;
c) Pyrolyse des Formkörpers unter Sauerstoffausschluss zu einem Kohlenstoff-Templat; und
d) Infiltration des Templats mit einer Siliziumschmelze.

2. Verfahren nach Anspruch 1, **dadurch gekennzeichnet,**
**dass** bei Herstellen eines Formkörpers durch Extrusion Holzfasern mit einem Gewichtsanteil von 80 bis 90 Gew.% und Bindemittel mit einer Schmelze-Massefließrate MFR = 1 bis 20 g/10 min eingesetzt werden.

3. Verfahren nach Anspruch 2, **dadurch gekennzeichnet,**
**dass** Holzfasern mit einem Anteil von 90 Gew.% und Bindemittel mit einer Schmelze-Massefließrate MFR = 2 g/10 min. eingesetzt werden.

4. Verfahren nach Anspruch 1, **dadurch gekennzeichnet,**
**dass** bei Herstellen eines Formkörpers durch Spritzgießen Holzfasern in einem Anteil von 60 bis 70 Gew.% und Bindemittel mit einer Schmelze-Massefließrate MFR = 7 bis 36 g/10 min eingesetzt werden.

5. Verfahren nach Anspruch 4, **dadurch gekennzeichnet,**
**dass** Holzfasern mit einem Anteil von 70 Gew.% und Bindemittel mit einer Schmelze-Massefließrate MFR = 7 g/10 min eingesetzt werden.

6. Verfahren nach einem der Ansprüche 1 bis 5, **dadurch gekennzeichnet,**
**dass** - jeweils bezogen auf den Ausgangsstoff - 0,5 bis 5 Gew.% Haftvermittler eingesetzt werden.

7. Verfahren nach einem der Ansprüche 1 bis 6, **dadurch gekennzeichnet,**
**dass** - jeweils bezogen auf den Ausgangsstoff - 0,5 bis 3 Gew.% Gleitmittel eingesetzt werden.

8. Verfahren nach einem der Ansprüche 1 bis 7, **dadurch gekennzeichnet,**
**dass** - jeweils bezogen auf den Ausgangsstoff - 0,05 bis 0,5 Gew.% Stabilisatoren eingesetzt werden.

9. Verfahren nach einem der Ansprüche 1 bis 8, **dadurch gekennzeichnet,**
**dass** Füllstoffe eingesetzt werden.

10. Verfahren nach Anspruch 6, **dadurch gekennzeichnet,**
**dass** als Haftvermittler mit Maleinsäure gepfropftes Polypropylen (PP-MAH) oder mit Maleinsäure gepfropftes Polyethylen (PE-MAH) oder mit Maleinsäure gepfropftes Polybuten (PB-MAH) oder Vinyltrimethoxysilan oder Vinyltriethoxysilan eingesetzt werden.

11. Verfahren nach Anspruch 7, **dadurch gekennzeichnet,**
**dass** als Gleitmittel Polyolefinwachse oder Ca-Stearat oder Zn-Stearat oder Erucasäureamid oder Montansäurewachse eingesetzt werden.

12. Verfahren nach Anspruch 8, **dadurch gekennzeichnet,**
**dass** als Stabilisatoren sterisch gehinderte Phenole oder Amine oder Phosphite oder Benzophenone eingesetzt werden.

13. Verfahren nach Anspruch 9, **dadurch gekennzeichnet,**
**dass** als Füllstoffe Silizium und/oder Siliziumcarbid und/oder siliziertes Siliziumcarbid und/oder Kohlenstoff eingesetzt werden.

14. Verfahren nach einem der Ansprüche 1 bis 13, **dadurch gekennzeichnet,**
**dass** das Herstellen des thermoplastischen Ausgangsstoffs und das Herstellen des Formkörpers durch Direkt-Extrusion oder Direkt-Spritzgießen erfolgt.

## Claims

1. Method for producing a SiC ceramic component comprising the following steps:
a) producing a thermoplastic starting material by mixing the following - in each case relative to the starting material -
60 to 95 wt.% wood fiber and
5 to 40 wt.% polypropylene (PP), polyethylene (PE) or polybutene (PB) or mixtures thereof as thermoplastic binding agents,
wherein for the melt mass flow rate (MFR) of PP, PE and PB:
for PP: MFR = 0.5 to 30 g/10 min, measured at 2.16 kg and 230 °C
for PE: MFR = 0.5 to 30 g/10 min, measured at 5 kg and 190 °C
for PB: MFR = 1 to 60 g/10 min, measured at 2.16 kg and 190 °C,
b) producing a moulded body from the thermoplastic starting material by extrusion or injection moulding;
c) pyrolysis of the moulded body in an oxygen-free environment to form a carbon template; and
d) infiltration of the template with a silicon melt.

2. Method according to claim 1, **characterised in that** when producing a moulded body by extrusion wood fibres are used with a weight proportion of 80 to 90 wt.% and binding agents are used with a melt mass flow rate MFR = 1 to 20 g/10 min.

3. Method according to claim 2, **characterised in that** wood fibres are used in a proportion of 90 wt.% and binding agents are used with a melt mass flow rate MFR = 2g/10 min.

4. Method according to claim 1, **characterised in that** when producing a moulded body by injection moulding wood fibres are used in a proportion of 60 to 70 wt.% and binding agents are used with a melt mass flow rate MFR = 7 to 36 g/10 min.

5. Method according to claim 4, **characterised in that** wood fibres are used in a proportion of 70 wt.% and binding agents are used with a melt mass flow rate MFR = 7 g/10 min.

6. Method according to any one of claims 1 to 5, **characterised in that** - in relation to the starting material - 0.5 to 5 wt.% binding agents are used.

7. Method according to any one of claims 1 to 6, **characterised in that** - in relation to the starting material - 0.5 to 3 wt.% lubricants are used.

8. Method according to any one of claims 1 to 7, **characterised in that** - in relation to the starting material - 0.05 to 0.5 wt.% stabilisers are used.

9. Method according to any one of claims 1 to 8, **characterised in that** fillers are used.

10. Method according to claim 6, **characterised in that** polypropylene (PP-MAH) grafted with maleic acid or polyethylene (PE-MAH) grafted with maleic acid or polybutene (PB-MAH) grafted with maleic acid or vinyltrimethoxysilane or vinyltriethoxysilane are used as binding agents.

11. Method according to claim 7, **characterised in that** polyolefin waxes or Ca-stearate or Zn-stearate or erucic acid amide or montan acid waxes are used as lubricants.

12. Method according to claim 8, **characterised in that** sterically hindered phenols or amines or phosphites or benzophenones are used as stabilisers.

13. Method according to claim 9, **characterised in that** silicon and/or silicon carbide and/or siliconised silicon carbide and/or carbon are used as fillers.

14. Method according to any one of claims 1 to 13, **characterised in that** the thermoplastic starting material and the moulded body are produced by means of direct extrusion or direct injection moulding.

## Revendications

1. Procédé de fabrication d'un élément de construction en SiC-céramique avec les étapes suivantes:
a) Préparer une matière première thermoplastique par mélange de - respectivement par rapport à la matière première -
60 à 95 % en poids de fibres de bois et
5 à 40 % en poids de polypropylène (PP), de polyéthylène (PE) ou de polybutène (PB) ou des mélanges de ceux-ci en tant que liant thermoplastique,
la vitesse d'écoulement de masse fondue (MFR) du PP, du PE et du PB valant :
Pour le PP : MFR = 0,5 à 30 g/10 minutes, mesuré pour 2,16 kg et 230°C
Pour le PE : MFR = 0,5 à 30 g/10 minutes, mesuré pour 5 kg et 190°C
Pour le PB : MFR = 1 à 60 g/10 minutes, mesuré pour 2,16 kg et 190°C
b) Fabriquer un corps moulé à partir de la matière première thermoplastique par extrusion ou moulage par injection ;
c) Pyrolyser le corps moulé sous exclusion d'oxygène pour obtenir un gabarit en carbone ; et
d) Infiltrer le gabarit avec une masse fondue de silicium.

2. Procédé selon la revendication 1, **caractérisé en ce que**,
lors de la fabrication, par extrusion, d'un corps moulé, des fibres de bois avec une part en poids de 80 à 90 % en poids et du liant avec une vitesse d'écoulement de masse fondue MFR = 1 à 20 g/10 minutes sont utilisés.

3. Procédé selon la revendication 2, **caractérisé en ce que**,
des fibres de bois avec une part de 90 % en poids et du liant avec une vitesse d'écoulement de masse fondue MFR = 2 g/10 minutes sont utilisés.

4. Procédé selon la revendication 1, **caractérisé en ce que**,
lors de la fabrication, par moulage par injection, d'un corps moulé, des fibres de bois avec une part de 60 à 70 % en poids et du liant avec une vitesse d'écoulement de masse fondue MFR = 7 à 36 g/10 minutes sont utilisés.

5. Procédé selon la revendication 4, **caractérisé en ce que**,
des fibres de bois avec une part de 70 % en poids et du liant avec une vitesse d'écoulement de masse fondue MFR = 7 g/10 minutes sont utilisées.

6. Procédé selon l'une quelconque des revendications 1 à 5, **caractérisé en ce que**,
0,5 à 5 % en poids de promoteurs d'adhérence - respectivement par rapport à la matière première - sont utilisés.

7. Procédé selon l'une quelconque des revendications 1 à 6, **caractérisé en ce que**,
0,5 à 3 % en poids de lubrifiants - respectivement par rapport à la matière première - sont utilisés.

8. Procédé selon l'une quelconque des revendications 1 à 7, **caractérisé en ce que**,
0,05 à 0,5 % en poids d'agents stabilisants - respectivement par rapport à la matière première - sont utilisés.

9. Procédé selon l'une quelconque des revendications 1 à 8, **caractérisé en ce que**,
des matières de charge sont utilisées.

10. Procédé selon la revendication 6, **caractérisé en ce que**,
du polypropylène greffé avec de l'acide maléique (PP-MAH) ou du polyéthylène greffé avec de l'acide maléique (PE-MAH) ou du polybutène greffé avec de l'acide maléique (PB-MAH) ou du triméthoxysilane de vinyle ou du triéthoxysilane de vinyle sont utilisés en tant que promoteurs d'adhérence.

11. Procédé selon la revendication 7, **caractérisé en ce que**,
des cires de polyoléfine ou du stéarate de calcium ou du stéarate de zinc ou de l'amide d'acide érucique ou des cires d'acide montanique sont utilisés en tant que lubrifiants.

12. Procédé selon la revendication 8, **caractérisé en ce que**,
des phénols ou des amines ou des phosphites ou des benzophénones stériquement encombrés sont utilisés en tant qu'agents stabilisants.

13. Procédé selon la revendication 9, **caractérisé en ce que**,
du silicium et/ou du carbure de silicium et/ou du carbure de silicium siliconé et/ou du carbone sont utilisés en tant que matières de charge.

14. Procédé selon l'une quelconque des revendications 1 à 13, **caractérisé en ce que**,
la préparation de la matière première thermoplastique et la fabrication du corps moulé a lieu par extrusion directe ou moulage direct par injection.
